# EUROPEAN PATENT APPLICATION

(11) **EP 0 791 757 A1**
(43) Date of publication of application: **27.08.1997**
(21) Application number: 97300800.6
(22) Date of filing: 07.02.1997
(51) Int. Cl.: F16B 19/10, B21J 15/04

(54) **Blind rivet**

(30) Priority: 27.02.1996 GB 9604158
(71) Applicant: EMHART INC., Newark, Delaware 19711 (US)
(72) Inventor: Jones, Steven, Great Barr, Birmingham B43 5LN (GB)
(74) Representative: Stagg, Diana Christine

(57) **Abstract**

Known rivet assemblies comprise a tubular body having a flange with a mandrel passing through the member having a pulling head at one end and a setting head at the other. In order to keep the relative positions of the mandrel and the rivet body prior to use a production bulge is used. Problems arise if the bulge is too large or too small. A raised helix placed on the exposed portion of the mandrel solves these problems.

## Description

The present invention relates to an improved blind rivet assembly, and in particular to a rivet assembly having a double headed mandrel.

Such blind rivet assemblies comprise a tubular rivet body and a mandrel which passes through the rivet body. The rivet body comprises a tubular shank with a flange at one end. The mandrel has heads at both ends, one to deform the end of the rivet body remote from the flange and the other to engage pulling means of a setting tool. Such a rivet is known for example from GB 2 149 709A. The end of the rivet body remote from the flange abuts the first of these heads, and is held in position prior to setting by localised bulges on the mandrel which engage with the internal surface of the rivet body in an interference fit.

The bulge is necessary to locate the rivet body in the correct position relative to the mandrel for use. However, as the production tooling wears or even where raw material is at the extremes of tolerance, the rivet body can tend to swell (due to the assembly bulge) beyond the maximum allowed diameter). Also the interference fit may not be made or made only minimally.

This leads to a further problem in that when such an assembly is fed through automatic machinery to a setting tool, when the rivet is halted by arresting of the flange, kinetic energy in the mandrel can cause the rivet body and mandrel to become disengaged. This can lead to misfeeding problems during operation of the setting tool.

The present invention relates to a rivet assembly comprising a rivet body and a mandrel, the rivet body having a tubular shank with a flange at one end and the mandrel passing through the rivet body and having a pulling head at one end and a setting head at another end, the setting head being adjacent the rivet body at an end remote from the flange, characterised in that the mandrel between the pulling head and the flange has a portion adjacent the pulling head for engagement by pulling means of a setting tool, and a portion having a raised helix adjacent the rivet body flange.

This raised helix portion can be used to locate the rivet body with respect to the mandrel.

This construction has also been found to reduce unexpectedly the number of misfeeds that occur when fed by automatic machinery to a setting tool as compared with prior double headed rivets.

The invention will now be described by way of example only, with reference to the accompanying drawings, in which
Figure 1 shows a side view of a rivet assembly according to the present invention; and
Figure 2 shows the rivet assembly of Figure 1 in an end of a setting tool.

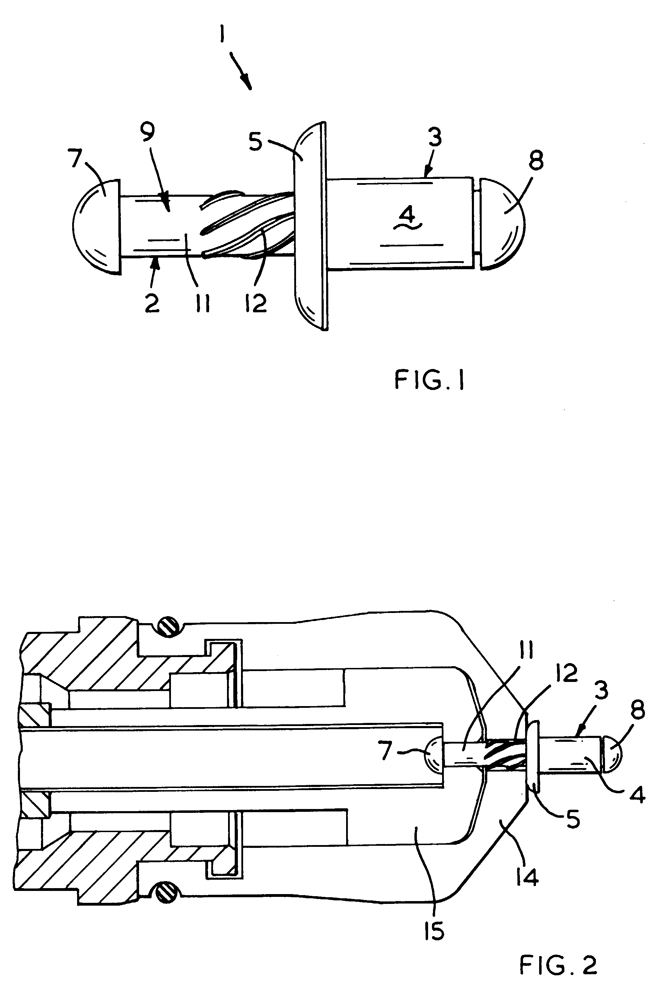

Referring first to Figure 1, there is shown a rivet assembly 1 comprising a mandrel 2 and a rivet body 3. The mandrel 2 comprises a pulling head 7 and a setting head 8 joined by a stem 9. The rivet body 3 comprises a tubular shank 4 with a flange 5 at one end.

The rivet body 3 is arranged with an end remote from the flange 5 adjacent the setting head 8.

The mandrel stem 9 is provided with a raised helix 12 extending from a point approximately half way between the pulling head and the setting head towards the pulling head. The helix is raised to such an extent that the rivet body cannot pass easily over the raised helix. The remainder 11 of the stem 9 from the raised helix to the pulling head is free of the raised helix and provides a location for a pulling means, such as pulling jaws 15 of a setting tool. This is shown more clearly in Figure 2.

Figure 2 shows a rivet assembly 1 according to the present invention held in a front end of a setting tool. Pulling jaws 15 engage the portion 11 of the stem 9 free from the raised helix 12 and abut a flat underside of the pulling head 7. The nose piece 14 of the illustrated setting tool is of split collet construction. This allows the pulling head to pass through the nosepiece and into the pulling jaws. In use, the nosepiece abuts the flange 5 of the rivet body 3 and the raised helix 12 of the mandrel stem 9.

The nosepiece 14 merely serves to support the rivet body against the pulling force generated by the pulling jaws 15. The nosepiece does not grip the raised helix since this would prevent the relative movement of the mandrel setting head 8 and the rivet body 3 which would cause the rivet body to deform during setting of the rivet assembly.

Preferably, the mandrel stem is provided with a break neck portion (not shown) between the raised helix and the pulling head. On setting the rivet body is deformed and on further pulling the mandrel breaks at the break neck portion, the setting head remaining within the deformed rivet body after setting.

## Claims

1. A blind rivet assembly comprising a rivet body and a mandrel
the rivet body having a tubular shank with a flange at one end,
the mandrel passing through the rivet body and having a pulling head at one end and a setting head at another end, the setting head being adjacent the rivet body at an end remote from the flange, characterised in that
the mandrel between the pulling head and the flange has a portion adjacent the pulling head for engagement by pulling means of a setting tool, and a portion having a raised helix adjacent the rivet body flange.

2. A blind rivet assembly substantially as described herein with respect to and as illustrated in the accompanying drawings.
